# EUROPEAN PATENT SPECIFICATION

(11) **EP 1 847 008 B1**
(45) Date of publication and mention of the grant of the patent: **15.04.2009**
(21) Application number: 06707812.1
(22) Date of filing: 24.01.2006
(51) Int. Cl.: H02M 3/158

(54) **SWITCHING CONVERTER**
SCHALTWANDLER
CONVERTISSEUR DE COMMUTATION

(30) Priority: 09.02.2005 DE 102005005872
(43) Date of publication of application: 24.10.2007
(73) Proprietor: Thomson Licensing, 92100 Boulogne-Billancourt (FR)
(72) Inventor: KÖGEL, Reinhard, 78086 Brigachtal (DE); LOUVEL, Jean-paul, 78086 Brigachtal (DE)
(74) Representative: Arnold, Klaus-Peter
(86) International application number: PCT/EP2006/050395
(87) International publication number: WO 2006/084789

(56) References cited:
- US-B1- 6 222 352
- ANONYMOUS: "MC34064, MC33064, NCV33064 Undervoltage Sensing Circuit" ON SEMICONDUCTOR, [Online] no. REV.7, June 2002 (2002-06), XP002382820 Retrieved from the Internet: URL:http://www.ee.washington.edu/stores/Da taSheets/linear/mc34064.pdf> [retrieved on 2006-05-24]

## Description

### BACKGROUND OF THE INVENTION AND PRIOR ART

The present invention relates to a switching converter having a switching transistor, an inductance and a diode, and to a television set having a respective converter. Switching converters of this type are often used, for example, in consumer electronics appliances in order to provide a further supply voltage, in addition to the supply voltages produced by a switched-mode power suppl unit. Such a switching converter is disclosed in US 6 222 352 B1.

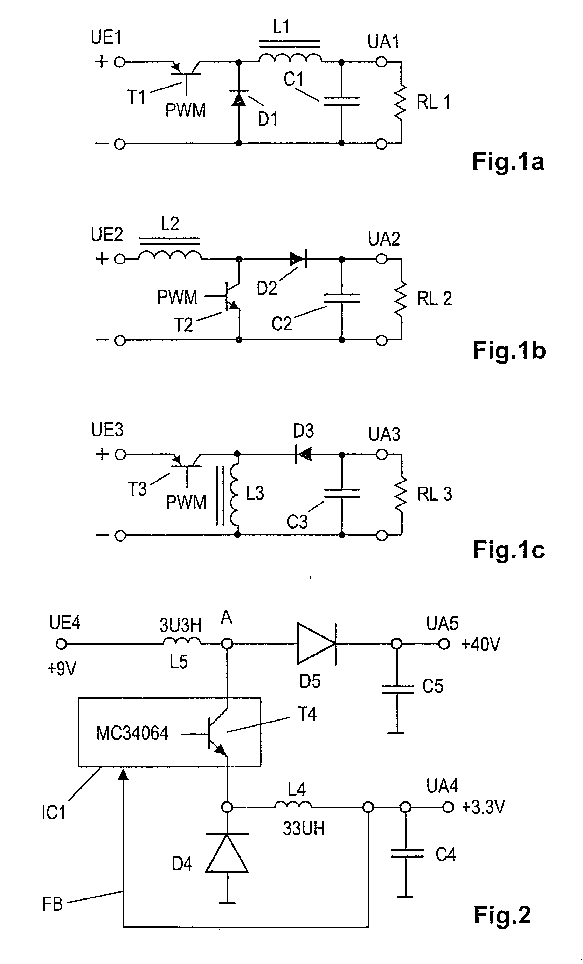

Switching converters according to the prior art are known, for example, as step-up converters, step-down converters or inverse converters. Circuits of this type are illustrated schematically in Figures 1a, 1b and 1c. Figure 1a shows a step-down converter having a switching transistor T1, which is connected at the emitter to a DC voltage UE1 and at the collector to a coil L1. Furthermore, a diode D1, whose anode is connected to earth, is connected to the collector.

On the output side, a capacitor C1, connected to earth, is connected to the inductance L1 and provides a supply voltage UA1 for a load RL1. The base of the switching transistor T1 is in this case controlled via a feedback circuit and a regulating circuit (not illustrated), for example by means of a PWM signal, such that the output voltage UA1 is stabilized as a function of the load RL1.

Figure 1b illustrates a step-up converter which has a coil L2, which is connected on the input side to a DC voltage UE2, and a switching transistor T2, which is connected on the collector side to the output of the coil L2 and on the emitter side to earth. Furthermore, a diode D2 is connected to the collector of the switching transistor T2 and provides, on the output side, a rectified supply voltage UA2 via a capacitor C2 for the purpose of supplying a load RL2.

Figure 1c illustrates an inverse converter having a switching transistor T3, a coil L3 and a diode D3 for the purpose of producing an output voltage UA3 which has an inverted polarity with respect to the input voltage UE3.

### SUMMARY OF THE INVENTION

The switching converter according to the invention has a switching transistor, an inductance and a diode, which are arranged as a step-down converter for generating a first rectified output voltage from a rectified input voltage. The switching transistor is connected on the input side to the input voltage via a second inductance, and a second diode is coupled on the anode side to a tap arranged between the second inductance and the switching transistor for the purpose of producing a second output voltage. The second output voltage is in this case a rectified voltage which is higher than the input voltage.

The switching transistor is, for example, part of an integrated circuit or is coupled to an integrated driver circuit for the purpose of producing a regulated first output voltage. The second output voltage is in this case not regulated because the switching transistor is clocked as a function of the loading of the first output voltage, for example by means of a PWM signal. For specific uses, for example in television sets or other consumer electronics appliances which have a tuner, this is not a disadvantage, however. In this case, the second output voltage can be used, in particular, for producing the +40 Volt voltage which is required by respective tuners for tuning of capacitance diodes. The first output voltage can be used, in particular, for the purpose of supplying integrated circuits which require a very low supply voltage of, for example, 3.3 Volts, 2.5 Volts or 1.8 Volts.

In this case, a supply voltage of an already existing switched-mode power supply unit can be used as the input voltage for the switching converter. In particular if all of the connection pins provided for output voltages of the transformer of the switched-mode power supply unit are already occupied, the switching converter according to the invention provides a cost-effective alternative for producing the tuning voltage of the tuner.

### BRIEF DESCRIPTION OF THE FIGURES

The invention will be explained, by way of example, in more detail below, with reference to a schematic circuit diagram. In the figures:
- Figure 1a: shows a step-down converter according to the prior art,
- Figure 1b: shows a step-up converter according to the prior art,
- Figure 1c: shows an inverse converter according to the prior art, and
- Figure 2: shows a switching converter according to the invention for the purpose of producing two output voltages.

### DESCRIPTION OF PREFERRED EMBODIMENTS

Figure 2 illustrates a switching converter having a switching transistor T4 which is integrated, in this exemplary embodiment, in an integrated circuit IC1. The circuit IC1 is, for example, an integrated circuit MC34064, which can be acquired, for example, from ON Semiconductors, and contains control and supervisory circuits for the operation of the switching transistor T4. In particular, a MOSFET can also be used as the switching transistor T4.

The switching transistor T4 is connected on the input side to a rectified input voltage UE4 and on the output side to earth via a diode D4. An inductance L4, in this exemplary embodiment a coil, is connected to the output of the switching transistor T4 and is connected at its other end to a charging capacitor C4.

The diode D4 is connected to earth at its anode; the circuit is therefore connected so as to form a step-down converter and, in this exemplary embodiment, produces a rectified output voltage UA4 of +3.3 Volts at the charging capacitor C4 from a +9 Volt DC voltage. The output voltage UA4 is stabilized via a feedback loop FB. In this case, a regulating signal containing information on the output voltage UA4, which is applied via the capacitor C4, is fed back to a regulating input of the integrated circuit IC1. This circuit is known to this extent as a step-down converter.

According to the invention, a second inductance L5, in particular a coil, is arranged between the current input of the switching transistor T4 and the input voltage UE4. The inductance value of the inductance L5 is less than the inductance of the first inductance L4, and is preferably less than 30%, only 10% in the exemplary embodiment in Figure 2. The operation of the step-down converter for producing the output voltage UA4 is not impaired thereby. The inductance L5 brings about a voltage drop if the switching transistor T4 is on. This voltage drop should, however, not be so great that it disrupts the operation of the step-down converter for producing the output voltage UA4.

Furthermore, a diode D5 is connected to the inductance L5 at its cathode and is connected at its anode to a second charging capacitor C5, which is connected to earth, for the purpose of producing a second rectified output voltage UA5. The cathode of the diode D5 is coupled to a tap A being arranged between the inductance L5 and the switching transistor T4.

This circuit functions as follows: If the switching transistor T4 is on, a current flows through the inductance L5 and causes a magnetic field to be built up. If the switching transistor T4 is off, an induced voltage is produced via the inductance L5, and this induced voltage charges the capacitor C5 via the diode D5. The switching transistor T4 therefore functions, together with the inductance L5 and the diode D5, as a step-up converter. The switching converter therefore produces two output voltages UA4 and UA5 simultaneously, of which the output voltage UA5 is higher and the output voltage UA4 is lower than the input voltage UE4.

The output voltage UA5 is in this case not regulated and depends, in particular, on the duty ratio at which the switching transistor T4 is operated. Since the inductance value of the inductance L5 is low, only a load having a low power consumption can be connected to the output voltage UA5. The switching converter is therefore expedient for specific application areas. It can be used, in particular, in television receivers, for example in television sets and video recorders which require an unregulated operating voltage of approximately 40 volts for operation of the respective tuner.

In television tuners today, a stabilization circuit is generally provided for the purpose of producing the +33 volt or +30 volt voltage for the capacitance diodes used for tuning purposes. An unregulated supply voltage in the range of approximately 40 - 50 volts is therefore sufficient. An output voltage UA5 with this range can be produced by appropriately selecting the inductance of the coil L5, in particular if the output voltage UA4 is used for supplying a constant load.

The output voltage UA4 can advantageously be used for supplying digital circuits which require an unregulated supply voltage of +3.3 Volts, 2.5 Volts or less. Supply voltages of this nature can often not be supplied by conventional flyback-converter switched-mode power supply units with sufficient stability. The switching converter is therefore provided in particular as an addition to a switched-mode power supply unit which is already provided in a television receiver and at the same time provides the input voltage UE4 for the switching converter.

## Claims

1. Switching converter having a switching transistor (T4), a first inductance (L4) and a first diode (D4) being arranged as a step-down converter for producing a first rectified output voltage (UA4) from an input voltage (UE4), **characterized**
**in that** the switching transistor (T4) is coupled with an input terminal to the input voltage (UE4) via a second inductance (L5), and
**in that** a second diode (D5) is coupled to a tap (A) being arranged between the second inductance (L5) and the switching transistor (T4) for producing a second rectified output voltage (UA5).

2. Switching converter according to Claim 1, **characterized in that** the power supply has a control circuit (IC1) and a feedback loop (FB) for stabilizing the first output voltage (UA4).

3. Switching converter according to Claim 1 or 2, **characterized in that** the second diode (D5) is connected on the anode side to the second inductance (L5) for producing a second output voltage (UA5), which is higher than the input voltage (UE4).

4. Switching converter according to Claim 1, 2 or 3 **characterized in that** the inductance value of the second inductance (L5) is less than 30% of the value of the first inductance (L4).

5. Television receiver, **characterized in that** it has a switching converter according to one of the preceding claims.

6. Television receiver according to Claim 5, **characterized in that** the television receiver has a switched-mode power supply unit generating the input voltage (UE4) for the switching converter, and **in that** the television receiver has a tuner which is connected to the second output voltage (UA5).

7. Television receiver according to Claim 6, **characterized in that** the second output voltage (UA5) is usable as a tuning voltage for the tuner.

## Patentansprüche

1. Getaktete Stromversorgung mit einem Schalttransistor (T4), einer ersten Induktivität (L4) und einer ersten Diode (D4), die als Abwärtswandler beschaltet sind zur Erzeugung einer ersten gleichgerichteten Ausgangsspannung (UA4) aus einer Eingangsspannung (UE4), **dadurch gekennzeichnet,**
**dass** der Schalttransistor (T4) eingangsseitig über eine zweite Induktivität (L5) mit der Eingangsspannung (UE4) verbunden ist, und
**dass** zwischen der zweiten Induktivität (L5) und dem Schalttransistor (T4) eine zweite Diode (D5) angekoppelt ist zur Erzeugung einer zweiten gleichgerichteten Ausgangsspannung (UA5).

2. Getaktete Stromversorgung nach Anspruch 1, **dadurch gekennzeichnet, dass** die Stromversorgung eine Steuerschaltung (IC1) und eine Rückkoppelschleife (FB) aufweist zur Stabilisierung der ersten Ausgangsspannung (UA4).

3. Getaktete Stromversorgung nach Anspruch 1 oder 2, **dadurch gekennzeichnet, dass** die zweite Diode (D5) anodenseitig mit der zweiten Induktivität (L5) verbunden ist zur Erzeugung einer zweiten Ausgangsspannung (UA5), die höher ist als die Eingangsspannung (UE4).

4. Getaktete Stromversorgung nach Anspruch 1, 2 oder 3, **dadurch gekennzeichnet, dass** der Induktivitätswert der zweiten Induktivität (L5) weniger als 30% des Wertes der ersten Induktivität (L4) beträgt.

5. Fernsehempfänger, **dadurch gekennzeichnet, dass** er eine getaktete Stromversorgung nach einem der vorangehenden Ansprüche aufweist.

6. Fernsehempfänger nach Anspruch 5, **dadurch gekennzeichnet, dass** der Fernsehempfänger ein Schaltnetzteil aufweist zur Erzeugung der Eingangsspannung (UE4), und dass der Fernsehempfänger einen Tuner aufweist, der mit der zweiten Ausgangsspannung (UA5) verbunden ist.

7. Fernsehempfänger nach Anspruch 6, **dadurch gekennzeichnet, dass** die zweite Ausgangsspannung (UA5) als eine Abstimmspannung für den Tuner verwendbar ist.

## Revendications

1. Convertisseur de commutation comportant un transistor (T4) de commutation, une première inductance (L4) et une première diode (D4) agencé comme un convertisseur abaisseur pour produire une première tension (UA4) de sortie redressée à partir d'une tension (UE4) d'entrée, **caractérisé**
**en ce que** le transistor (T4) de commutation est couplé par un terminal d'entrée à la tension (UE4) d'entrée via une seconde inductance (L5), et
**en ce qu'**une seconde diode (D5) est couplée à un branchement (A) disposé entre la seconde inductance (L5) et le transistor (T4) de commutation pour produire une seconde tension (UA5) de sortie redressée.

2. Convertisseur de commutation selon la revendication 1, **caractérisé en ce que** le bloc d'alimentation possède un circuit (IC1) de commande et une boucle d'asservissement (FB) pour stabiliser la première tension (UA4) de sortie.

3. Convertisseur de commutation selon la revendication 1 ou 2, **caractérisé en ce que** la seconde diode (D5) est connectée du côté anode à la seconde inductance (L5) pour produire une seconde tension (UA5) de sortie, qui est supérieure à la tension (UE4) d'entrée.

4. Convertisseur de commutation selon la revendication 1, 2 ou 3, **caractérisé en ce que** la valeur d'inductance de la seconde inductance (L5) est inférieure de 30% à la valeur de la première inductance (L4).

5. Téléviseur, **caractérisé en ce qu'**il possède un convertisseur de commutation selon une des revendications précédentes.

6. Téléviseur selon la revendication 5, **caractérisé en ce que** le téléviseur possède un bloc d'alimentation à découpage générant la tension (UE4) d'entrée pour le convertisseur de commutation, et **en ce que** le récepteur de télévision possède un syntoniseur qui est connecté à la seconde tension (UA5) de sortie.

7. Téléviseur selon la revendication 6, **caractérisé en ce que** la seconde tension (UA5) de sortie est utilisable comme tension de syntonisation pour le syntoniseur.
